# EUROPÄISCHE PATENTSCHRIFT

(11) **EP 1 758 780 B1**
(45) Veröffentlichungstag und Bekanntmachung des Hinweises auf die Patenterteilung: **23.09.2009**
(21) Anmeldenummer: 05761129.5
(22) Anmeldetag: 17.06.2005
(51) Int. Cl.: B60T 17/02, B60T 13/52

(54) **VERFAHREN ZUM BEREITSTELLEN VON UNTERDRUCK IN EINER UNTERDRUCKKAMMER EINES PNEUMATISCHEN BREMSKRAFTVERSTÄRKERS**
METHOD FOR PROVIDING A NEGATIVE PRESSURE IN A VACUUM CHAMBER OF A PNEUMATIC BRAKE BOOSTER
PROCEDE DE CREATION D'UNE DEPRESSION DANS UNE CHAMBRE DE DEPRESSION D'UN SERVOFREIN PNEUMATIQUE

(30) Priorität: 17.06.2004 DE 102004029115; 15.06.2005 DE 102005027768
(43) Veröffentlichungstag der Anmeldung: 07.03.2007
(73) Patentinhaber: Continental Teves AG & Co. oHG, 60488 Frankfurt (DE)
(72) Erfinder: SCHONLAU, Jürgen, 65396 Walluf (DE); RÜFFER, Manfred, 65843 Sulzbach (DE); GONZALEZ, Jose, 32549 Bad Oeynhausen (DE)
(86) Internationale Anmeldenummer: PCT/EP2005/052831
(87) Internationale Veröffentlichungsnummer: WO 2005/123476

(56) Entgegenhaltungen:
- EP-A- 0 999 109
- DE-A1- 4 416 833
- DE-A1- 19 929 880
- US-A- 4 738 112
- US-B1- 6 324 845

## Beschreibung

Die Erfindung betrifft ein Verfahren zum Bereitstellen von Unterdruck einer Bremsbetätigungsvorrichtung einer Kraftfahrzeugbremsanlage umfassend einen pneumatischen Bremskraftverstärker, dessen Innenraum in wenigstens eine Unterdruckkammer und eine Arbeitskammer unterteilt ist, einen Hauptbremszylinder sowie ein pneumatisches Motor-Pumpenaggregat zur Bereitstellung des Unterdrucks in der Unterdruckkammer, welches eine Unterdruckpumpe und einen die Unterdruckpumpe antreibenden Motor umfasst, wobei ein Unterdruckniveau in der Unterdruckkammer ein Druckunterschied zwischen der Unterdruckkammer und der Arbeitskammer mittels eines Sensors erfasst wird und das Motor-Pumpenaggregat durch eine elektronischen Steuereinheit bei Unterschreiten eines ersten bestimmten, unteren Unterdruckniveaus in der Unterdruckkammer eingeschaltet und bei Erreichen eines zweiten bestimmten, oberen Unterdruckniveaus ausgeschaltet wird.

Ein derartiges Verfahren ist beispielsweise aus der DE 199 29 880 A1 bekannt, wobei die Unterdruckpumpe zusätzlich abhängig von Betriebeszuständen der Antriebseinheit aktiviert wird. Als nachteilig wird jedoch angesehen, dass die Aktivierung und der Betrieb der Unterdruckpumpe in verschiedenen Fahrzuständen einen hohen Geräuschpegel verursachen, was von einem Fahrer des Fahrzeuges als störend empfunden wird.

Es gilt daher ein Verfahren für die Problematik anzubieten, die durch das Motor-Pumpenaggregat entstehenden Störgeräusche zu minimieren bzw. an Fahrzustände des Fahrzeuges anzupassen.

Zur Lösung dieser Aufgabe wird ein Verfahren vorgeschlagen, dessen Besonderheit darin besteht, dass eine Drehzahl des Motor-Pumpenaggregats abhängig von Fahrzuständen des Fahrzeuges gesteuert wird. Damit wird die Möglichkeit geschaffen, die Drehzahl des Motor-Pumpenaggregats an das in den jeweiligen Fahrzuständen herrschende Fahrzeuggeräuschniveau anzupassen, um so keine bzw. geringe Störgeräusche zu verursachen. Ferner können dadurch unnötig hohe Bordnetzbelastungen vermieden werden.

Vorzugsweise wird die Drehzahl des Motor-Pumpenaggregats von einer elektronischen Pumpen-Steuereinheit gesteuert, welche mittels eines Bussystem mit einer elektronischen Motor-Steuereinheit und einer Längsdynamik-Steuereinheit des Fahrzeuges in Verbindung steht. Damit können die Fahrzeugzustände eindeutig erfasst werden und das Motor-Pumpenaggregat über die Pumpen-Steuereinheit entsprechend angesteuert werden.

Um die Störgeräusche vor einem Start eines Fahrzeugantriebs möglichst gering zu halten, wird nach einer vorteilhaften Weiterbildung des erfindungsgemäßen Verfahrens das Motor-Pumpenaggregat vor dem Starten des Fahrzeugantriebes eingeschaltet und mit einer minimalen Drehzahl betrieben, wenn das Unterdruckniveau in der Unterdruckkammer unterhalb des unteren Unterdruckniveaus liegt und sobald ein Signal vorliegt, welches auf ein mögliches Starten des Fahrzeugantriebes hinweist. Ein derartiges Signal kann beispielsweise durch Bedienen des Türöffnungssensors oder durch Öffnen des Fahrzeuges durch Bedienen einer Zentralverriegelung erzeugt werden. Andere vorteilhafte Ausführungsformen sehen vor, dass das Signal ein Bremslichtsensorsignal oder ein E-Gassensorsignal ist.

Befindet sich der Fahrzeugantrieb bzw. das Fahrzeug in ' einer Startphase wird das Motor-Pumpenaggregat bis zum Erreichen des unteren Unterdruckniveaus mit einer maximalen Drehzahl und danach bis zum Erreichen des oberen Unterdruckniveaus mit einer in Bezug auf den Geräuschpegel optimierten Drehzahl betrieben. So ist sichergestellt, dass dem Bremskraftverstärker in angemessener Zeit das untere Unterdruckniveau zur Verfügung steht und das obere Unterdruckniveau mit einer optimierten, d.h. an das Fahrzeuggeräuschniveau angepassten Drehzahl erreicht wird. Dabei wird die Startphase vorzugsweise durch Signale von Raddrehzahlsensoren und/oder Getriebesensoren erkannt.

Weiter wird gemäß einer vorteilhaften Weiterbildung des erfindungsgemäßen Verfahrens die Drehzahl des Motor-Pumpenaggregats in Abhängigkeit von einer Geschwindigkeit des Fahrzeuges gesteuert. Dabei gibt die Längsdynamik-Steuereinheit, welche die Geschwindigkeit erfasst, entsprechende Signale an die Pumpen-Steuereinheit weiter.

Vorzugsweise wird die Drehzahl des Motor-Pumpenaggregats abhängig von der Geschwindigkeit des Fahrzeuges mit einer Drehzahl der Antriebseinheit synchronisiert, um das Geräuschniveau des Motor-Pumpenaggregats an das Geräuschniveau der Antriebseinheit anzupassen.

Das Motor-Pumpenaggregat wird vorzugsweise bis zum Erreichen des oberen Unterdruckniveaus mit einer Drehzahl betrieben, welche mit einer Drehzahl der Antriebseinheit synchronisiert ist, wenn die Geschwindigkeit des Fahrzeuges unterhalb einer bestimmten Geschwindigkeit liegt, und wird bis zum Erreichen des oberen Unterdruckniveaus mit einer maximalen Drehzahl betrieben, wenn die Geschwindigkeit des Fahrzeuges oberhalb einer bestimmten Geschwindigkeit liegt.

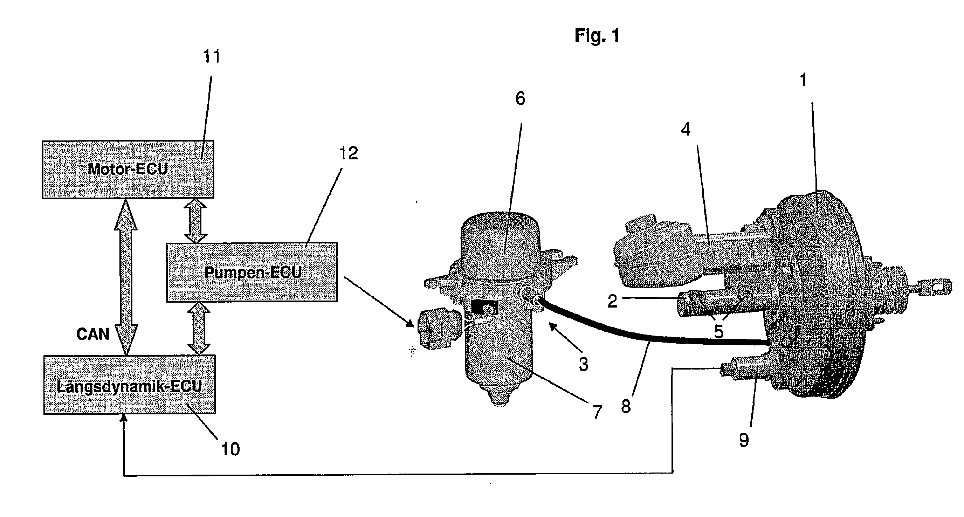

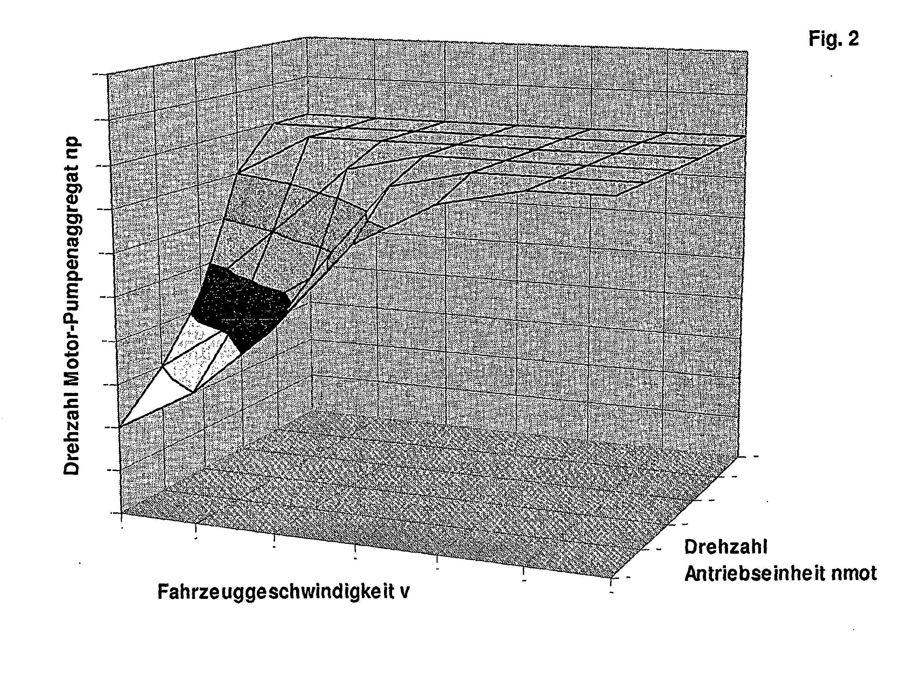

Eine vorteilhafte Ausgestaltung des erfindungsgemäßen Verfahrens wird anhand der nachfolgenden Zeichnung näher beschrieben. Figur 1 zeigt dabei einen schematischen Systemaufbau einer Bremsbetätigungsvorrichtung einer Kraftfahrzeugbremsanlage. In Figur 2 ist ein Kennfeld Motordrehzahl zu Pumpendrehzahl in Abhängigkeit von einer Fahrzeuggeschwindigkeit dargestellt.

Aus Fig. 1 ist ersichtlich, dass eine Bremsbetätigungsvorrichtung zur Durchführung des erfindungsgemäßen Verfahrens einen pneumatischen Bremskraftverstärker 1, einem daran angeordneten Hauptbremszylinder 2 sowie ein pneumatisches Motor-Pumpenaggregat 3 umfasst.

Der grundsätzliche Aufbau und die Funktion der Bremsbetätigungsvorrichtung sind allgemein bekannt, so dass nachstehend nur die erfindungswesentlichen Merkmale beschrieben werden.

Ein nicht gezeigter Innenraum des Bremskraftverstärkers 1 wird durch wenigstens eine bewegliche Wand in wenigstens eine Unterdruckkammer und wenigstens eine Arbeitskammer unterteilt. Der Hauptbremszylinder 2 weist zwei in einem Gehäuse verschiebbare, nicht gezeigte Kolben auf, welche zusammen mit dem Gehäuse jeweils einen hydraulischen Druckraum begrenzen. Die Druckräume sind mit einem drucklosen Druckmittelbehälter 4 und über Ausgänge 5 mit nicht dargestellten Radbremsen der Kraftfahrzeugbremsanlage verbindbar.

Das Motor-Pumpenaggregat 3 umfasst eine Unterdruckpumpe 6 und einen die Unterdruckpumpe 6 antreibenden Elektromotor 7. Um dem Bremskraftverstärker 1 Unterdruck bereitzustellen, ist die Unterdruckpumpe 6 über eine Saugleitung 8 mit der nicht dargestellten Unterdruckkammer des Bremskraftverstärkers 1 verbunden. Ein an dem Bremskraftverstärker 1 oder der Unterdruckpumpe 6 angeordneter Vakuumsensor 9 erfasst ein Unterdruckniveau in der Unterdruckkammer bzw. eine Druckdifferenz zwischen Unterdruckkammer und Arbeitskammer, wobei dieser erfasste Druck in einer elektronischen Längsdynamik-Steuereinheit (Längsdynamik-ECU) 10 ausgewertet wird. Der Vakuumsensor 9 kann im Rahmen der Erfindung auch in der Saugleitung 8 angeordnet sein.

Die Längsdynamik-Steuereinheit 10, welche neben dem Drucksignal des Vakuumsensors 9 auch ein Geschwindigkeitssignal von nicht gezeigten Raddrehzahlsensoren erfasst, ist über einen Bussystem CAN (Controller Area Network) mit einer elektronischen Motor-Steuereinheit (Motor-ECU) 11, einer Pumpen-Steuereinheit (Pumpen-ECU) 12 sowie einer nicht dargestellten, grundsätzlich bekannten ABS-Steuereinheit (ABS-ECU) verbunden. Die Motor-ECU 11 erfasst ein Drehzahlsignal einer nicht gezeigten Antriebseinheit (Motor) des Fahrzeuges. Es ist ebenfalls denkbar, das Motor-Pumpenaggregat 3 ohne eine separate Pumpen-ECU 12 mittels der ABS-ECU zu steuern.

Die Aktivierung des Motor-Pumpenaggregats 3 erfolgt bei Unterschreiten eines ersten bestimmten, unteren Unterdruckniveaus Pe (ca. 0,6 bar Unterdruck, d.h. 0,4 bar absolut) in der Unterdruckkammer, welches zum Betrieb des Bremskraftverstärkers benötigt wird. Bei Erreichen eines zweiten bestimmten, oberen Unterdruckniveaus Pa (ca. 0,8 bar Unterdruck, d.h. 0,2 bar absolut) wird das Motor-Pumpenaggregat 3 ausgeschaltet, um die Belastungen des Motor-Pumpenaggregats 6 zu reduzieren und damit dessen Lebenszeit zu verlängern. Diese Art des Betriebes führt jedoch zu erhöhten Geräusch- und zu unnötig hohen Bordnetzbelastungen.

Um die genannten Nachteile zu kompensieren, erfolgt gemäß - dem erfindungsgemäßen Verfahren die Steuerung einer Drehzahl des Motor-Pumpenaggregats 3 durch die Pumpen-ECU 12 abhängig von Fahrzuständen des Fahrzeuges.

Insbesondere vor oder während einer Startphase des Fahrzeuges bzw. des Fahrzeugantriebes werden die Geräusche des Motor-Pumpenaggregats 3 als störend empfunden, da noch keine Fahrgeräusche vorhanden sind. Daher wird das Motor-Pumpenaggregat 3 vor dem Starten des Fahrzeugantriebes eingeschaltet und mit einer minimalen Drehzahl npₘᵢₙ betrieben, wenn das Unterdruckniveau in der Unterdruckkammer unterhalb des unteren Unterdruckniveaus Pe liegt und sobald ein Signal vorliegt, welches auf ein mögliches Starten des Fahrzeugantriebes hinweist. Ein derartiges Signal kann beispielsweise durch Bedienen des Türöffnungssensors oder durch Öffnen des Fahrzeuges durch Bedienen einer Zentralverriegelung erzeugt werden.

Andere vorteilhafte Ausführungsformen sehen beispielsweise vor, dass das Signal ein Bremslichtsensorsignal oder ein E-Gassensorsignal ist.

Während einer Startphase des Fahrzeugantriebes bzw. des Fahrzeuges wird das Motor-Pumpenaggregat 3 bis zum Erreichen des unteren Unterdruckniveaus Pe mit einer maximalen Drehzahl npₘₐₓ und danach bis zum Erreichen des oberen Unterdruckniveaus Pa mit einer Bezug auf den Geräuschpegel optimierten Drehzahl npₒₚₜ betrieben. So ist sichergestellt, dass dem Bremskraftverstärker in angemessener Zeit das untere Unterdruckniveau Pe zur Verfügung steht und das obere Unterdruckniveau Pa mit einer optimierten, d.h. an das Fahrzeuggeräuschniveau angepassten Drehzahl erreicht wird. Dabei wird die Startphase vorzugsweise durch Signale von Raddrehzahlsensoren und/oder Getriebesensoren erkannt wird.

Da das Fahrzeuggeräuschniveau auch abhängig von einer Geschwindigkeit v des Fahrzeuges ist, erfolgt die Steuerung der Drehzahl np des Motor-Pumpenaggregats 3 abhängig von der Geschwindigkeit v des Fahrzeuges, die in der Längsdynamik-ECU 10 erfasst wird. Hierzu werden entsprechende Signale über das Bussystem CAN an die Pumpen-ECU 12 weitergeleitet.

Beispielsweise kann die Drehzahl np des Motor-Pumpenaggregats 3 mit einer Drehzahl nmot der Antriebseinheit synchronisiert werden, um das Geräuschniveau des Motor-Pumpenaggregats 3 an das Geräuschniveau der Antriebseinheit anzupassen. Dabei wird das Motor-Pumpenaggregat 3 bis zum Erreichen des oberen Unterdruckniveaus Pa mit einer Drehzahl np betrieben, welche mit der Drehzahl nmot der Antriebseinheit synchronisiert ist, wenn die Geschwindigkeit v des Fahrzeuges unterhalb einer bestimmten Geschwindigkeit Vₙ - beispielsweise 60 km/h - liegt. Befindet sich das Fahrzeug in einem Geschwindigkeitsbereich oberhalb der bestimmten Geschwindigkeit Vₙ, wird das Motor-Pumpenaggregat 3 bis zum Erreichen des oberen Unterdruckniveaus Pa mit einer maximalen Drehzahl npₘₐₓ betrieben.

Im Rahmen der Erfindung ist es grundsätzlich möglich, das Motor-Pumpenaggregat 3 mit einer bestimmten Drehzahl anzusteuern, sobald in der Längsdynamik-ECU 10 eine starke Verzögerung des Fahrzeuges erkannt wird, beispielsweise durch ein Signal des Vakuumsensors 9 oder eines nicht gezeigten Drucksensors, welcher zur Erfassung des fahrerseitig eingesteuerten Druckes in einer nicht dargestellten Bremsleitung angeordnet ist.

Weiter ist es denkbar, das Motor-Pumpenaggregat 3 mit der maximalen Drehzahl npₘₐₓ bis zum Erreichen des unteren Unterdruckniveaus Pe zu betreiben, wenn das untere Unterdruckniveau Pe trotz laufendem Motor-Pumpenaggregat 3 nicht kurzfristig in einer bestimmten Zeit erreicht wird, um das Bereitstellen des unteren Unterdruckniveaus Pe in der Unterdruckkammer schnellst möglich zu gewährleisten.

Fig. 2 zeigt ein Kennfeld Motordrehzahl nmot zur Pumpendrehzahl bzw. Drehzahl np des Motor-Pumpenaggregates 3 in Abhängigkeit von einer Fahrzeuggeschwindigkeit dargestellt.

Grundsätzlich ist das erfindungsgemäße Verfahren auch bei einer Bremsbetätigungsvorrichtung mit einem mit Überdruck betriebenen Bremskraftverstärker umfassend eine Kammer höheren Druckes und eine Kammer niedrigeren Druckes einsetzbar. Die Bremsbetätigungsvorrichtung weist dabei ein Motor-Pumpenaggregat umfassend eine Überdruckpumpe und einen die Überdruckpumpe antreibenden Elektromotor auf. Um der Bremsbetätigungsvorrichtung den Überdruck bereitzustellen, ist die Überdruckpumpe über eine Leitung mit der Kammer höheren Druckes verbunden. Abhängig von einem Druck in der Kammer höheren Druckes oder abhängig von einem Druckunterschied zwischen den beiden Kammern erfolgt ein Ein- und Ausschalten der Überdruckpumpe, wobei die Drehzahl des Motor-Pumpenaggregats abhängig von Fahrzuständen des Fahrzeuges gemäß der vorstehenden Beschreibung gesteuert wird.

### Bezugszeichenliste

- 1: Bremskraftverstärker
- 2: Hauptbremszylinder
- 3: Motor-Pumpenaggregat
- 4: Druckmittelbehälter
- 5: Ausgang
- 6: Unterdruckpumpe
- 7: Elektromotor
- 8: Saugleitung
- 9: Vakuumsensor
- 10: Längsdynamik-Steuereinheit
- 11: Motor-Steuereinheit
- 12: Pumpen-Steuereinheit

- nmot: Drehzahl der Antriebseinheit
- np: Drehzahl des Motor-Pumpenaggregats
- npₒₚₜ: optimierte Drehzahl des Motor-Pumpenaggregats npₘₐₓ maximale Drehzahl des Motor-Pumpenaggregats npₘᵢₙ minimale Drehzahl des Motor-Pumpenaggregats

- Pa: oberes Unterdruckniveau
- Pe: unteres Unterdruckniveau
- v: Geschwindigkeit des Fahrzeuges
- vₙ: bestimmte Geschwindigkeit des Fahrzeuges

## Patentansprüche

1. Verfahren zum Bereitstellen von Unterdruck einer Bremsbetätigungsvorrichtung einer Kraftfahrzeugbremsanlage umfassend einen pneumatischen Bremskraftverstärker (1), dessen Innenraum in wenigstens eine Unterdruckkammer und eine Arbeitskammer unterteilt ist, einen Hauptbremszylinder (2) sowie ein pneumatisches Motor-Pumpenaggregat (3) zur Bereitstellung des Unterdrucks in der Unterdruckkammer, welches eine Unterdruckpumpe (6) und einen die Unterdruckpumpe (6) antreibenden Motor (7) umfasst, wobei ein Unterdruckniveau in der Unterdruckkammer bzw. ein Druckunterschied zwischen der Unterdruckkammer und der Arbeitskammer mittels eines Sensors (9) erfasst wird und das Motor-Pumpenaggregat (3) durch eine elektronische Steuereinheit (12) bei Unterschreiten eines ersten bestimmten, unteren Unterdruckniveaus (Pe) in der Unterdruckkammer eingeschaltet und bei Erreichen eines zweiten bestimmten, oberen Unterdruckniveaus (Pa) ausgeschaltet wird, **dadurch gekennzeichnet, dass** eine Drehzahl (np) des Motor-Pumpenaggregats (3) abhängig von Fahrzuständen des Fahrzeuges gesteuert wird.

2. Verfahren nach Anspruch 1, **dadurch gekennzeichnet, dass** die Drehzahl (np) des Motor-Pumpenaggregats (3) von einer elektronischen Pumpen-Steuereinheit (12) gesteuert wird, welche mittels eines Bussystem mit einer elektronischen Motor-Steuereinheit (11) und einer elektronischen Längsdynamik-Steuereinheit (10) des Fahrzeuges in Verbindung steht.

3. Verfahren nach Anspruch 1 oder 2, **dadurch gekennzeichnet, dass** das Motor-Pumpenaggregat (3) vor einem Starten eines Fahrzeugantriebes eingeschaltet und mit einer minimalen Drehzahl (npₘᵢₙ) betrieben wird, wenn das Unterdruckniveau in der Unterdruckkammer unterhalb des unteren Unterdruckniveaus (Pe) liegt und sobald ein Signal vorliegt, welches auf ein mögliches Starten des Fahrzeugantriebes hinweist.

4. Verfahren nach Anspruch 3, **dadurch gekennzeichnet, dass** das Signal durch Bedienen eines Türöffnungssensors ausgegeben wird.

5. Verfahren nach Anspruch 3, **dadurch gekennzeichnet, dass** das Signal durch Öffnen des Fahrzeuges durch Bedienen einer Zentralverriegelung ausgegeben wird.

6. Verfahren nach Anspruch 3, **dadurch gekennzeichnet, dass** das Signal ein Bremslichtsensorsignal ist.

7. Verfahren nach Anspruch 3, **dadurch gekennzeichnet, dass** das Signal ein E-Gassensorsignal ist.

8. Verfahren nach einem der vorangegangenen Ansprüche, **dadurch gekennzeichnet, dass** das Motor-Pumpenaggregat (3) während einer Startphase des Fahrzeugantriebes bis zum Erreichen des unteren Unterdruckniveaus (Pe) mit einer maximalen Drehzahl (npₘₐₓ) betrieben wird und danach bis zum Erreichen des oberen Unterdruckniveaus (Pa) mit einer optimierten Drehzahl(npₒₚₜ) betrieben wird.

9. Verfahren nach Anspruch 8, **dadurch gekennzeichnet, dass** die Startphase durch Signale von Raddrehzahlsensoren und/oder Getriebesensoren erkannt wird.

10. Verfahren nach einem der vorangegangenen Ansprüche, **dadurch gekennzeichnet, dass** die Drehzahl des Motor-Pumpenaggregats (3) in Abhängigkeit von einer Geschwindigkeit (v) des Fahrzeuges gesteuert wird.

11. Verfahren nach Anspruch 10, **dadurch gekennzeichnet, dass** die Drehzahl (np) des Motor-Pumpenaggregats (3) abhängig von der Geschwindigkeit (v) des Fahrzeuges mit einer Drehzahl (nmot) der Antriebseinheit synchronisiert wird.

12. Verfahren nach Anspruch 10 oder 11, **dadurch gekennzeichnet, dass** das Motor-Pumpenaggregat (3) bis zum Erreichen des oberen Unterdruckniveaus (Pa) mit einer Drehzahl (np) betrieben wird, welche mit einer Drehzahl (nmot) der Antriebseinheit synchronisiert ist, wenn die Geschwindigkeit (v) des Fahrzeuges unterhalb einer bestimmten Geschwindigkeit (vₙ) liegt, und dass das Motor-Pumpenaggregat (3) bis zum Erreichen des oberen Unterdruckniveaus (Pa) mit einer maximalen Drehzahl (npₘₐₓ) betrieben wird, wenn die Geschwindigkeit (v) des Fahrzeuges oberhalb der bestimmten Geschwindigkeit (vₙ) liegt.

## Claims

1. Method for providing negative pressure to a brake activation device of a motor vehicle brake system comprising a pneumatic brake booster (1) whose interior is divided into at least one vacuum chamber and one working chamber, a master brake cylinder (2) and a pneumatic motor-pump assembly (3) for providing the negative pressure in the vacuum chamber, which motor-pump assembly (3) comprises a vacuum pump (6) and motor (7) which drives the vacuum pump (6), wherein a negative pressure level in the vacuum chamber or a difference in pressure between the vacuum chamber and the working chamber is sensed by means of a sensor (9), and the motor-pump assembly (3) is switched on by an electronic control unit (12) when the negative pressure in the vacuum chamber drops below a first, specific, lower negative pressure level (Pe), and is switched off when the negative pressure reaches a second, specific, upper negative pressure level (Pa), **characterized in that** a rotational speed (np) of the motor-pump assembly (3) is controlled as a function of driving states of the vehicle.

2. Method according to Claim 1, **characterized in that** the rotational speed (np) of the motor-pump assembly (3) is controlled by an electronic pump control unit (12) which is connected by means of a bus system to an electronic motor control unit (11) and an electronic longitudinal dynamic control unit (10) of the vehicle.

3. Method according to Claim 1 or 2, **characterized in that** the motor-pump assembly (3) is switched on before a vehicle drive is started and is operated with a minimum rotational speed (npₘᵢₙ) if the negative pressure level in the vacuum chamber is below the lower negative pressure level (Pe), and as soon as a signal is present which indicates possible starting of the vehicle drive.

4. Method according to Claim 3, **characterized in that** the signal is output by operating a door opening sensor.

5. Method according to Claim 3, **characterized in that** the signal is output by opening the vehicle by operating a central locking system.

6. Method according to Claim 3, **characterized in that** the signal is a brake light sensor signal.

7. Method according to Claim 3, **characterized in that** the signal is an e-gas sensor signal.

8. Method according to one of the preceding claims, **characterized in that** the motor-pump assembly (3) is operated with a maximum rotational speed (npₘₐₓ) during a starting phase of the vehicle drive until the lower negative pressure level (Pe) is reached, and is then operated with an optimized rotational speed (npₒₚₜ) until the upper negative pressure level (Pa) is reached.

9. Method according to Claim 8, **characterized in that** the starting phase is detected by means of signals of wheel speed sensors and/or transmission sensors.

10. Method according to one of the preceding claims, **characterized in that** the rotational speed of the motor-pump assembly (3) is controlled as a function of a velocity (v) of the vehicle.

11. Method according to Claim 10, **characterized in that** the rotational speed (np) of the motor-pump assembly (3) is synchronized with a rotational speed (nmot) of the drive unit as a function of the velocity (v) of the vehicle.

12. Method according to Claim 10 or 11, **characterized in that** until the upper negative pressure level (Pa) is reached, the motor-pump assembly (3) is operated at a rotational speed (np) which is synchronized with a rotational speed (nmot) of the drive unit if the velocity (v) of the vehicle is below a specific velocity (vₙ), and **in that** until the upper negative pressure level (Pa) is reached, the motor-pump assembly (3) is operated at a maximum rotational speed (npₘₐₓ) if the velocity (v) of the vehicle is above the specific velocity (vₙ).

## Revendications

1. Procédé de création d'une dépression dans un dispositif d'actionnement de frein d'installation de freinage de véhicule automobile comprenant un servofrein pneumatique (1) dont l'espace intérieur est divisé en au moins une chambre de dépression et une chambre de travail, un vérin de frein principal (2) ainsi qu'un groupe de pompe de moteur (3) pneumatique permettant de créer la dépression dans la chambre de dépression, ledit groupe comprenant une pompe de dépression (6) et un moteur (7) entraînant la pompe de dépression (6), un niveau de dépression régnant dans la chambre de dépression et/ou une différence de pression établie entre la chambre de dépression et la chambre de travail étant détectés à l'aide d'un capteur (9) et le groupe de pompe de moteur (3) étant activé par une unité de commande électronique (12) en cas de passage en dessous d'un premier niveau de dépression (Pe) inférieur défini dans la chambre de dépression et étant désactivé lorsqu'un deuxième niveau de dépression (Pa) supérieur défini est atteint, **caractérisé en ce qu'**une vitesse de rotation (np) du groupe de pompe de moteur (3) est commandée en fonction des états de conduite du véhicule.

2. Procédé selon la revendication 1, **caractérisé en ce que** la vitesse de rotation (np) du groupe de pompe du moteur (3) est commandée par une unité de commande de pompe électronique (12) qui est en relation avec une unité de commande (11) électronique du moteur et une unité de commande (10) électronique de dynamique longitudinale du véhicule à l'aide d'un système de bus.

3. Procédé selon la revendication 1 ou 2, **caractérisé en ce que** le groupe de pompe de moteur (3) est actionné lors du démarrage de l'entraînement du véhicule et actionné à une vitesse de rotation (npₘᵢₙ) minimale lorsque le niveau de dépression se situe en dessous du niveau de dépression (Pe) inférieur dans la chambre de dépression et dès qu'un signal indiquant un démarrage possible de l'entraînement du véhicule est émis.

4. Procédé selon la revendication 3, **caractérisé en ce que** le signal est émis à l'actionnement d'un capteur d'ouverture de porte.

5. Procédé selon la revendication 3, **caractérisé en ce que** le signal est émis à l'ouverture du véhicule par actionnement d'un système de verrouillage centralisé.

6. Procédé selon la revendication 3, **caractérisé en ce que** le signal est un signal de capteur de feu de stop.

7. Procédé selon la revendication 3, **caractérisé en ce que** le signal est un signal de capteur de détection électronique d'accélération.

8. Procédé selon l'une quelconque des revendications précédentes, **caractérisé en ce que** le groupe de pompe de moteur (3) est entraîné à une vitesse de rotation maximale (npₘₐₓ) pendant une phase de démarrage de l'entraînement du véhicule jusqu'à ce que le niveau de dépression (Pe) inférieur soit atteint puis à une vitesse de rotation optimisée (npₒₚₜ) jusqu'à ce que le niveau de dépression (Pa) supérieur soit atteint.

9. Procédé selon la revendication 8, **caractérisé en ce que** la phase de démarrage est reconnue grâce aux signaux provenant des capteurs de vitesse de rotation de roue et/ou des capteurs de boîte de vitesses.

10. Procédé selon l'une quelconque des revendications précédentes, **caractérisé en ce que** la vitesse de rotation du groupe de pompe de moteur (3) est commandée en fonction de la vitesse (v) du véhicule.

11. Procédé selon la revendication 10, **caractérisé en ce que** la vitesse de rotation (np) du groupe de pompe du moteur (3) est synchronisée avec la vitesse de rotation (nmot) de l'unité d'entraînement en fonction de la vitesse (v) du véhicule.

12. Procédé selon la revendication 10 ou 11, **caractérisé en ce que** le groupe de pompe du moteur (3) est entraîné à une vitesse de rotation (np) jusqu'à ce que le niveau de dépression (Pa) supérieur soit atteint, ladite vitesse étant synchronisée avec une vitesse de rotation (nmot) de l'unité d'entraînement lorsque la vitesse (v) du véhicule se situe en dessous d'une vitesse (vₙ) donnée et que le groupe de pompe de moteur (3) est entraîné à une vitesse de rotation maximale (npₘₐₓ) jusqu'à ce que le niveau de dépression (Pa) supérieur soit atteint, lorsque la vitesse (v) du véhicule se situe au-dessus d'une vitesse (vₙ) donnée.
